# EUROPEAN PATENT APPLICATION

(11) **EP 1 995 831 A1**
(43) Date of publication of application: **26.11.2008**
(21) Application number: 08251799.6
(22) Date of filing: 23.05.2008
(51) Int. Cl.: H01R 13/66, H04Q 7/30

(54) **Electrical fixture combined with a wireless communication device**

(30) Priority: 24.05.2007 US 940010 P
(71) Applicant: Optimal Innovations Inc, Bridgetown (BB)
(72) Inventor: Schoettle, Roland, Freeport, Bahamas (US)
(74) Representative: Jackson, Richard Eric

(57) **Abstract**

The current invention is directed to using utility outlets as wireless hubs within a premise so as to avoid the use of stand-alone wireless access points. Using utility outlets as wireless hubs requires the use of less cables and enhances security of wireless communication in a premises.

## Description

### CROSS-REFERENCE TO RELATED APPLICATIONS

This application claims priority from U.S. Provisional Patent Application No. 60/940,010, filed May 24, 2007, the disclosure of which is hereby incorporated herein by reference. The present application is also related to co-pending, and commonly assigned U.S. Patent Application No. 10/094,743, entitled "HYBRID FIBER/CONDUCTOR INTEGRATED COMMUNICATION NETWORKS;" U.S. Patent Application No. 11 /512,742, entitled "HYBRID FIBER/CONDUCTOR INTEGRATED COMMUNICATION NETWORKS;" U.S. Patent Application No. 11/683,304, entitled "SYSTEMS AND METHODS FOR LINKING UTILITY CONTROL DEVICES;" U.S. Patent Application No. 11/683,327, entitled "SYSTEM AND METHOD FOR INFRASTRUCTURE REPORTING;" U.S. Patent Application No. 11/683,298, entitled "LIGHT SWITCH USED AS A COMMUNICATION DEVICE;" U.S. Patent Application No. 11/683,308, entitled "SYSTEM AND METHOD FOR PREMISES MONITORING USING WEIGHT DETECTION;" U.S. Patent Application No. 11/923,176, entitled "SELF LEARNING AUTOMATION SYSTEM;" U.S. Patent Application No. 11/683,326, entitled "ANTICIPATORY UTILITY CONTROL DEVICE;" U.S. Patent Application No. XX/XXX,XXX, Attorney Docket No. 66816/P016CP1/10704956, entitled "ANOMALY-BASED PREMISE CONTROL;" U.S. Patent Application No. 11/683,335, entitled "PLUG AND PLAY UTILITY CONTROL MODULES;" and U.S. Patent Application No. 11/683,354, entitled "LIGHT SWITCH POWER SUPPLY;" U.S. Patent Application No. XX/XXX,XXX, Attorney Docket No. 66816/P026US/10704960, entitled "UTILITY OUTLETS AS A SECURITY SYSTEM;" U.S. Provisional Patent Application No. 60/940,015, entitled "UTILITY OUTLETS AS REMOTE CONTROL REPEATERS;" U.S. Patent Application No. XX/XXX,XXX, Attorney Docket No. 66816/P029US/10704963, entitled "TEMPERATURE DETECTION AND CALCULATIONS OUTLETS;" U.S. Patent Application No. XX/XXX,XXX, Attorney Docket No. 66816/P030US/10704964, entitled "USING UTILITY OUTLETS TO DETERMINE AND REPORT MEDIA BASED ACTIVITY," the disclosures of which are hereby incorporated herein by reference.

### TECHNICAL FIELD

The current invention relates to utility outlets and specifically to the use of utility outlets in a premises as wireless hubs.

### BACKGROUND OF THE INVENTION

The rapid increase in the use of wireless networks in recent years includes the use of wireless networks in and around premises. A wireless network system replaces cables used to connect devices with a wireless access point (WAP) device. The WAP device connects a wireless device, such as a laptop, to a wired network or to another wireless device. For example, wireless networks at home, school or a business are commonplace because they offer users mobility and reduce the amount of cables needed to create a network.

The use of a traditional WAP, however, does not completely eliminate the need for cables because the WAP itself has to be connected to a power source by a cable. Moreover, the use of traditional WAP adds to the clutter of devices in a modem premises. Traditional WAP wireless networks include a WAP that has to transmit at a signal strength sufficient to reach the targeted wireless user device(s). Invariably, where there are multiple target wireless user devices, for example, multiple laptops located in different rooms in a premises, the WAP's location compromises some wireless user devices because the devices further away from the WAP usually receive poor service.

Further, the signal path to some wireless user devices may have more obstructions than others. With distance and obstructions as variables, service to one wireless user device is often poor while service to another is good. One possible solution to the problems of distance from the WAP to the wireless user device and obstructions between the WAP and the wireless user device is to increase the signal strength from the WAP. Increasing the signal strength, however, requires more expensive equipment. Moreover, increasing the signal strength to effectively cover the whole premises may result in the WAP broadcasting outside the intended range. Broadcasting outside of an intended range of a premises may pose security issues.

### BRIEF SUMMARY OF THE INVENTION

The present invention is directed to a system and method which uses one or more utility devices to provide wireless access points by receiving and transmitting wireless signals to and from a wired network. The present invention takes advantage of the fact that utility outlets, such as light switches, plug sockets and ceiling lights, are located in virtually every room in a premises. As typically located, utility devices provide an opportune means of providing wireless service to the area of the premise in which the device is located.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 is one embodiment of the current invention illustrating a utility outlet as a wireless hub;

FIGURE 2 illustrates a prior art WAP system;

FIGURE 3 illustrates the use of a utility outlet as a wireless hub;

FIGURE 4 shows a typical prior art WAP premises system; and

FIGURE 5 shows the use of a plurality of utility outlets as a wireless hub replacing the prior art WAP system.

### DETAILED DESCRIPTION OF THE INVENTION

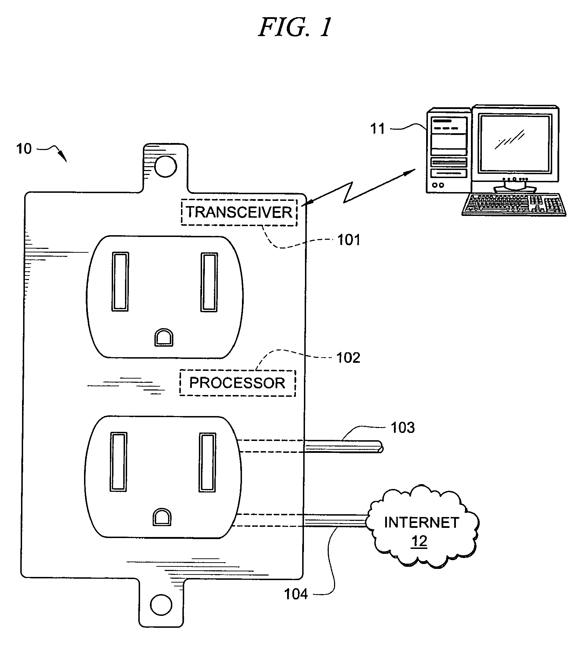

FIGURE 1 is one embodiment of the current invention illustrating a utility outlet 10 with capabilities to function as a wireless hub. Utility outlet 10, in this embodiment, is a power socket used in a premise to allow devices to connect to electrical power. In addition to serving as a connection point for devices, utility outlet 10 has the capability of communicating wirelessly with devices, such as laptops, PDA's, cell phones, and other such wireless devices. Utility outlet 10 communicates wirelessly with other devices, such as computer 11, via transceiver 101. Additionally, utility outlet 10 also includes processor 102 that allows utility outlet 10 to control and route communications. Utility outlet 10 is connected to the premise power supply by power cable 103 connected to terminals (not shown) on the utility device. The utility outlet may also include, if desired, communication cable 104 to, for example, connect to a wired network, such as to Internet 12.

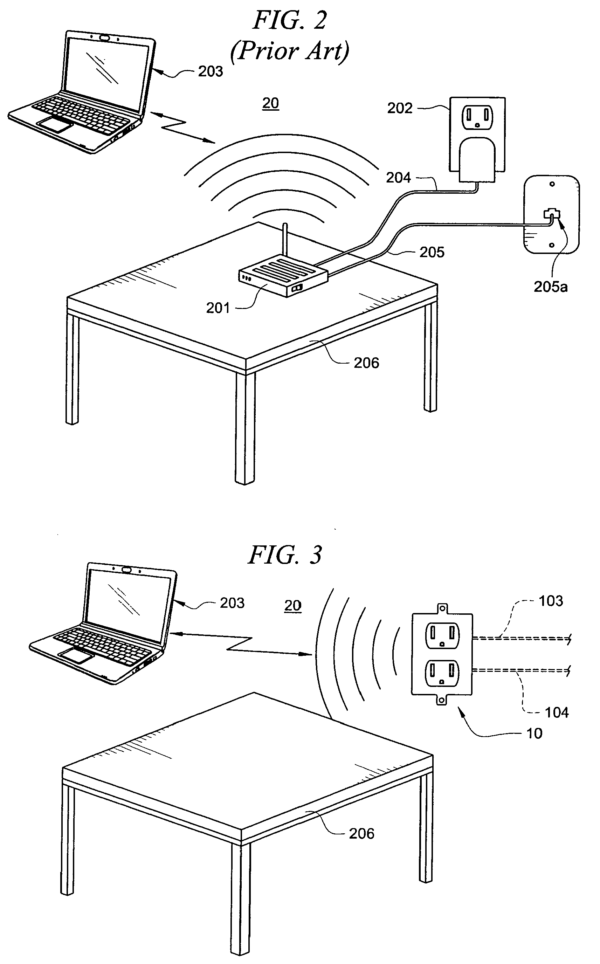

FIGURE 2 illustrates the use of a conventional WAP, such as WAP 201 in premises 20. WAP 201 is plugged into a conventional power socket 202. As is well known, wireless technology has eliminated the need to have cables between WAP 201 and laptop 203. As illustrated, the hallmark of wireless technology has been the increase in mobility of user devices and the elimination of unsightly cables around a premises. Significantly, however, the latter benefit of wireless technology has not been completely realized. Power cable 204 is required in conventional wireless networks to transmit power from outlet 202 to WAP 201. Additionally WAP 201 requires a cable, such as 205, to connect to a wired network via outlet connector 205A. WAP 201, and its associating wiring, occupy valuable space and to most persons is aesthetically unappealing.

The wireless network using a conventional WAP, as illustrated in FIGURE 2, is contrasted with the use of a utility outlet as a wireless hub as illustrated in FIGURE 3. In FIGURE 3, utility outlet 10 is capable of communicating with laptop 203 wirelessly at premises 20 thereby eliminating the need for WAP 201 and its associated wiring, thereby freeing up table 206 for other purposes. Further, an inherent function of utility outlet 10 is to connect devices to a power supply. Thus, utility outlet 10 has power cable 103 internal to the physical structure of the premises. This same cable 103 supplies the power necessary to allow utility outlet 10 to operate as a wireless hub. Moreover, communication cable 104, in one embodiment, is connected to utility outlet 10 in a way such that when utility outlet 10 is installed in a premises, cable 104 is not visible. A visitor to a premises equipped with utility outlets 10, therefore, would not be aware that the premises has wireless equipment installed in the premises.

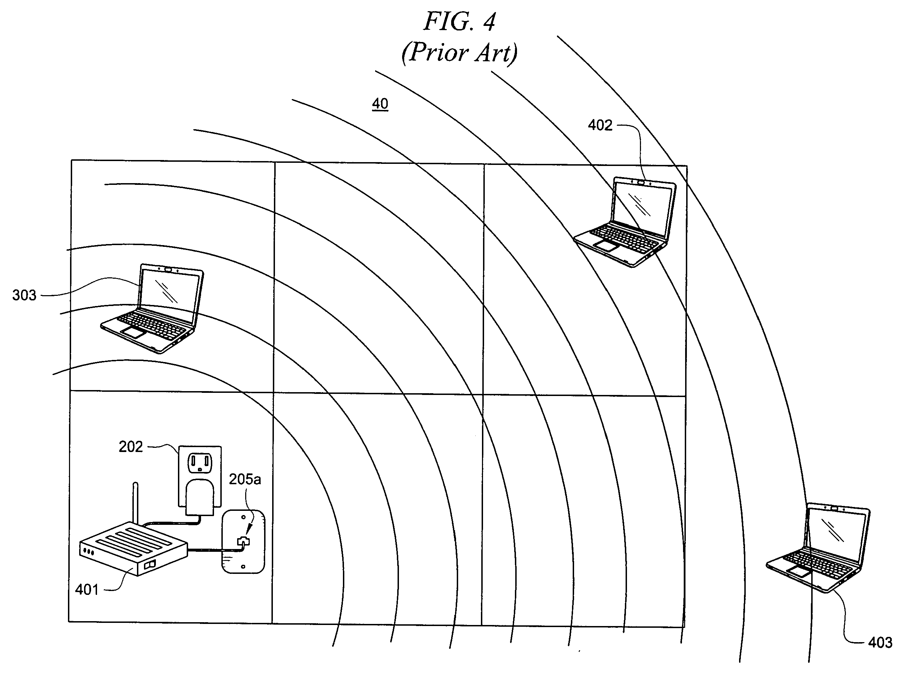

FIGURE 4 illustrates how a conventional WAP, such as WAP 401, is currently used to provide wireless service to a whole premise, such as premises 40 having a number of rooms. In the example, the premises is a home. As illustrated, WAP 401 sends signals strong enough to all areas of premise 40 such that distant devices, such as laptop 402 in a different room, can be effectively linked to the wireless network. The problem with this scenario is that intruder laptop device 403 outside of premises 40 can also link to this wireless network. Therefore, in addition to the need for a separate physical device 401, the WAP presents a security concern to the wireless network users of premises 40.

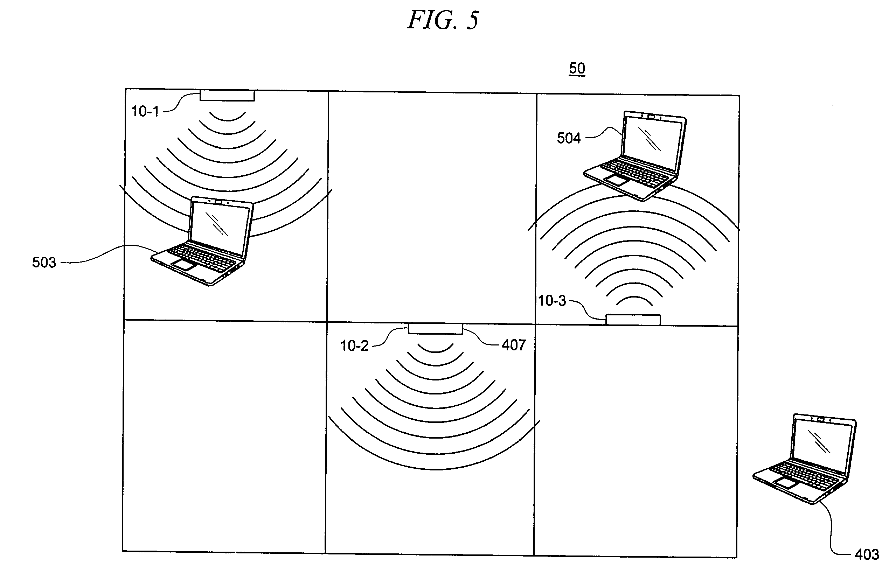

FIGURE 5 illustrates the use of a plurality of utility outlets, such as utility outlets 10-1, 10-2, and 10-3 as wireless hubs to obviate the need to broadcast at a strength that carries the signals outside the environs of premises 50. Thus, in FIGURE 5, the plurality of utility outlets provide wireless communication for different areas of premise 50. For example, utility outlet 10-1 is capable of wirelessly linking laptop 503 to the network while it would not be capable of doing so with regard to laptop 504. Instead, laptop 504 is linked to the network by utility outlet 10-3. Additionally, if desired, utility outlet 10-2 can serve as a hub for communications between utility devices 10-1 and 10-3. Implementing the current invention in premise 50, therefore, among other things, prevents intruder laptop 403 from accessing the wireless networks intended for users within premise 50.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A utility outlet for use within a premises, said utility outlet comprising:
means for connecting devices to said premises' electrical power; and means for connecting a first wireless communication device to at least one selected from a group consisting of:
a wired network, a second wireless communication device, a wired device, another utility outlet.

2. The utility outlet of claim 1 wherein said utility outlet is one of the group consisting of:
a power socket, an electrical switch, a permanent light socket.

3. The utility outlet of claim 1 further comprising:
means for controlling communications.

4. The utility outlet of claim 1 wherein said communication with another utility outlet is accomplished by:
wireless communications.

5. A method of using utility outlets in a premises as a wireless hub, said method comprising:
connecting, under control of a particular outlet, a first wireless communication device in a location proximate to said particular outlet to at least one selected from a group consisting of:
a wired network, a second wireless communication device, a wired device, and another outlet in a location physically remote from said particular outlet, said utility outlets capable of connecting other devices to said premises' electrical power.

6. The method of claim 5 wherein said utility outlets are selected from the group consisting of:
a power socket, an electrical switch, a permanent light socket.

7. The method of claim 5 further comprising:
controlling communications under control of at least one of said utility outlets.

8. The method of claim 7 wherein communication between said utility outlets is done using:
wireless communications.

9. A system of providing wireless service within a premise, said system comprising:
a plurality of utility outlets, said utility outlets capable of connecting devices to said premises' electrical power;
said outlets further capable of connecting a first wireless communication device to at least one selected from a group consisting of:
a wired network, a second wireless communication device, a wired device, another outlet.

10. The system of claim 9 wherein the utility outlets are selected from the group consisting of:
a power socket, an electrical switch, a permanent light socket.

11. The system of claim 9 wherein at least one of said utility outlets is capable of controlling and routing communications.

12. A utility device for use within a premises, said utility device comprising:
terminals for connecting said utility device to said premise's electrical power; and
a transceiver.

13. The utility device of claim 12 wherein said utility outlet is one of the group consisting of:
a power socket, an electrical switch, a permanent light socket.

14. The utility device of claim 12 further comprising:
a processor.

15. The utility device of claim 12 further comprising:
means for connecting said utility outlet to an electronic network.

16. The utility device of claim 12 wherein said transceiver connects a first wireless communication device to at least one selected from the group consisting of:
a wired network; a second wireless communication device; a wired device, another utility outlet.

17. The utility device of claim 16 wherein said utility device communicates wirelessly with said other utility device .
